# EUROPEAN PATENT APPLICATION

(11) **EP 4 835 774 A1**
(43) Date of publication of application: **04.11.2026**
(21) Application number: 25173813.4
(22) Date of filing: 30.04.2025
(51) Int. Cl.: G06Q 10/20, B25J 9/16, B65G 1/04, G05B 23/02, G06Q 10/087

(54) **A CONTAINER HANDLING DEVICE WITH A PLUGGABLE PROCESSING DEVICE**

(71) Applicant: AutoStore Technology AS, 5578 Nedre Vats (NO)
(72) Inventor: SELSAAS, Sondre, 5578 Nedre Vats (NO)
(74) Representative: Kilburn & Strode LLP

(57) **Abstract**

The disclosure relates to a container handling device for handling storage containers in an automated storage and retrieval system with a pluggable processing device, wherein the container handling device comprises a first interface for connecting to a pluggable memory device and is configured to store data related to maintenance of the container handling device on a pluggable memory device via the first interface and one of the container handling device or pluggable processing device is configured to transmit an indication of a detected or predicted maintenance event to a controller of the automated storage and retrieval system.

## Description

### TECHNICAL FIELD

The present disclosure relates to devices for use in an automated storage and retrieval system. More particularly, it relates to a container handling device, an automated storage and retrieval system, a pluggable processing device, and use of said pluggable processing device.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Automated storage and retrieval systems often employ a large number of various vehicles, ports, and/or other devices. All these devices require periodic maintenance and, should they malfunction, repairs. Therefore, automated storage and retrieval systems often generate a large number of maintenance events.

Maintenance events that relate to malfunctions or that require human intervention within the automated storage and retrieval system are especially problematic. The former pose a problem because they often evolve into a problem more serious than the original one, possibly leading to a significant degradation of system performance. The latter are problematic because many automatic storage and retrieval systems were not designed to allow easy access for humans. Moreover, once a human operator enters the system, at least a part of the system often must come to a standstill and therefore cannot serve its purpose.

Maintenance events, which can never be fully eliminated, provide a valuable source of data for any person trying to detect, predict and/or prevent them. One approach to collection and analysis of data related to maintenance from a device in an automated storage and retrieval system known in the prior art comprises saving data to a non-transitory computer memory, recovering said computer memory from the device once it fails, and analysing it post-failure. A human operator, or a specialised vehicle, must find the failed device (which may be surprisingly problematic, for example if the device falls off the grid), recover the computer memory, and bring it to a port or other suitable place in the system where it can be retrieved for further analysis, assuming that the computer memory is still readable and did not get damaged in the process. This approach is already cumbersome with small storage systems and becomes challenging for even medium-sized automated storage and retrieval systems.

### BRIEF DESCRIPTION OF THE DRAWINGS

The disclosure will be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device that may be provided on-board a container handling vehicle;
Fig. 4A shows a computing device that may be provided in a pluggable processing device described herein;
Fig. 5 shows an illustrative embodiment of the pluggable processing device described herein;
Fig. 6 shows an illustrative embodiment of a port and a robotic container-handling vehicle; and
Fig. 7 shows a computing device for implementing the operations described herein, for example, the operations of a controller.

### DETAILED DESCRIPTION

### Overview

In overview, the present disclosure relates to a container handling device for handling storage containers in an automated storage and retrieval system with a pluggable processing device; said pluggable processing device; an automated storage and retrieval system comprising a container handling device and a controller; and use of said pluggable processing device in an automated storage and retrieval system. The pluggable processing device interacts with the container handling device via a first interface of the container handling device and a second interface of the pluggable processing device and is configured to analyse data related to maintenance to detect or predict maintenance events. One of the container handling device or pluggable processing device is configured to transmit an indication of a detected or predicted maintenance event to a controller.

The pluggable processing device, when used with a container handling device, enables efficient analysis of data related to maintenance from the container handling device and transmission of an indication of a detected or predicted maintenance event to a controller. This approach allows for online, possibly essentially immediate, communication and processing of maintenance-related information, thus enabling early prediction and/or detection of possible maintenance events. This may enable rapid analysis of data gathered prior to malfunction, reducing system downtime, and improving reliability. Furthermore, early maintenance may prevent malfunctions at a later time.

Since the pluggable processing device is separate from the container handling device, it may detect and/or predict maintenance events even in cases when the firmware, hardware, or any other relevant part of the container handling device malfunctions or fails to detect these maintenance events. The pluggable processing device therefore increases the reliability and robustness of maintenance event prediction and/or detection, and provides a (primary or additional) mechanism for said prediction and/or detection.

If the container handling device is equipped with its own maintenance event prediction and/or detection system, the pluggable processing device may be used as a primary, backup, and/or additional mechanism for maintenance event prediction and/or detection. In a particular example, workload associated with maintenance event prediction and/or detection may be shared among the container handling device and the pluggable processing device, or it may be fully offloaded to the pluggable processing device.

Another advantage due to the pluggable processing device described in the present disclosure is that data from a failed container handling device can be received and analysed without salvaging the device first. This leads to better accessibility of data related to maintenance and lower system downtime. For example, the transmitted indication of a detected or predicted maintenance event may show that the malfunction can be solved without outside intervention. In some cases, the failed container handling device may be salvaged later without stopping the system or significantly reducing its performance. In some examples, there may be enough data received before the malfunction to enable advanced analysis and/or prediction of the performance of the automated storage and retrieval system (for example, a cost/benefit analysis of not salvaging the failed device and/or maintenance event prediction for other container handling devices in the system).

Because many container handling devices already come equipped with a suitable interface, the pluggable processing device as described in the present disclosure can be employed with no or minimal modification of existing container handling devices.

### Container handling device with a pluggable processing device

In a first aspect the present disclosure provides a container handling device for handling storage containers in an automated storage and retrieval system with a pluggable processing device. In particular examples, the container handling device may be a robotic vehicle for transporting storage containers or a port for accepting storage containers from a robotic vehicle. A container handling device may be any vehicle in the automated storage and retrieval system, for example a cantilever-type robot, a specialised robot, or any other type of robot or vehicle employed in the automated storage and retrieval system. A container handling device may be a port in the automated storage and retrieval system, for example any interface port at the boundary of the automated storage and retrieval system or any other port. A container handling device may be any device that does not directly transport or move but nevertheless interacts with a container, for example a cleaning robot, a harvesting vehicle, and/or a picking robot. In general, a container handling device may be any vehicle, robot, port, interface, or any other device that directly or indirectly handles or manipulates containers in an automated storage and retrieval system.

The container handling device comprises a first interface for connecting to a pluggable memory device. The first interface may comprise any suitable interface that enables communication (e.g., electronic, optical, etc.) between the container handling vehicle and the pluggable memory device and/or the pluggable processing device. For example, the first interface may comprise a memory card interface, USB interface, SATA interface, parallel-port interface, or any other suitable interface. The first interface need not be a standardized interface. The first interface need not be in direct contact with the pluggable memory device and/or the pluggable processing device. For example, the pluggable memory device may be connectable to the first interface using NFC, Bluetooth, IrDA, or an interconnecting cable. By providing a first interface, the container handling device may store or communicate data independently of or even outside the container handling device.

In accordance with the present disclosure, the pluggable processing device may plug into the interface for the pluggable memory device and hence have an interface identical to the interface of the pluggable memory device. For example, the container handling vehicle may be configured to store data on a pluggable memory device (such as a USB stick) via the first interface. The pluggable processing device may be configured to interact with the container handling device in essentially the same way as the pluggable memory device would, thus allowing for seamless use in already existing container handling devices. In other words, the pluggable processing device may be configured in such a way that the container handling device need not know that it is communication with the pluggable processing device rather than a pluggable memory device. This facilitates straightforward retrofitting and may simplify the use of the pluggable processing device. Also, any technical effect or benefit due to the pluggable memory device may be provided by the pluggable processing device.

The container handling device is configured to store data related to maintenance of the container handling device on a pluggable memory device via the first interface. For example, the container handling device may comprise a computer or a controller in communication with the first interface, adapted to send data over the first interface and store said data on the pluggable memory device. By storing data related to maintenance of the container handling device on the pluggable memory device, this data may be decoupled from the container handling device and duplicated to an independent memory, which increases the reliability of the system. Furthermore, since the data related to maintenance of the container handling device is stored on a separate device, it can be easily removed, accessed, and/or analysed outside the container handling device and/or outside the automated storage and retrieval system.

The pluggable processing device comprises a second interface connectable or connected to the first interface. The second interface need not be the only interface on the pluggable processing device. For example, the second interface may be connected to an auxiliary interface that further connects to the pluggable processing device. In some examples, the second interface (or, if present, the auxiliary interface) may comprise a reduction or an interconnection device facilitating the connection to the first interface. In some cases, at least a part of the second interface may be removable. The pluggable processing device may be used in place of a pluggable memory device, which increases interoperability of the pluggable processing device with existing container handling devices, simplifies requirements on the container handling device (e.g., the container handling device need not possess multiple specialised interfaces), and/or enables retrofitting existing container handling devices with pluggable processing devices.

The pluggable processing device comprises one or more processors. The one or more processors may comprise a complex instruction set computing (CISC) microprocessor, reduced instruction set computing (RISC) microprocessor, very long instruction word (VLIW) microprocessor, processor implementing other instruction sets, or processors implementing a combination of instruction sets. Processor may also be one or more special-purpose processors such as an application specific integrated circuit (ASIC), a field programmable gate array (FPGA), a digital signal processor (DSP), network processor, or the like. In general, the one or more processors may be any devices configured to execute machine executable instructions. The one or more processors may be in connection with any other component comprised in the pluggable processing device.

The pluggable processing device comprises one or more memories storing machine executable instructions. The one or more memories may comprise a read-only memory (ROM), a dynamic random-access memory (DRAM) (such as synchronous DRAM (SDRAM) or Rambus DRAM (RDRAM)), a static memory (e.g., flash memory, static random-access memory (SRAM), etc.), a hard-disk, a memory card, a data storage device, or any other types of memory. The one or more memories may be configured to communicate via a bus and/or may communicate with one or more processors.

The machine executable instructions are configured to cause the one or more processors to access data related to maintenance of the container handling device stored on the pluggable processing device via the first interface and the second interface. For example, the machine executable instructions may be configured to cause the one or more processor to load the data that is stored (or that is being stored) on the pluggable processing device for further processing. In some examples, the machine executable instructions may be configured to access data depending on data content or associated metadata. For example, the machine executable instructions may be configured to access data older than (or newer than) a given threshold, access data of a specific type, and/or access data characterised by any other attribute. Due to these instructions, data related to maintenance of the container handling device may be made available for further processing, thus enabling the technical effects and benefits due to operations and/or computations caused by other machine executable instructions.

Data related to maintenance may comprise any data related to the container handling device. Data related to maintenance may comprise a sensor measurement, for example a temperature, voltage, or current sensor measurement; an identifier of a software exception or malfunction; and/or an identifier of a hardware malfunction. Data related to maintenance may comprise telemetry data, communication data, network activity data, software log data, data related to previous maintenance, data from any subsystem of the container handling device, memory dumps and/or lack of data (for example, no data from a subsystem in a situation when at least some data would be expected). Data related to maintenance may comprise data created by processing other data related to maintenance.

The machine executable instructions are configured to cause the one or more processors to analyse the data related to maintenance of the container handling device to detect or predict a maintenance event. The machine executable instructions may comprise instructions adapted to cause a processor to carry out any algorithm related to signal processing, anomaly detection, any statistical or machine-learning algorithm, or any other suitable algorithm adapted or trained to detect and/or predict a maintenance event. The machine read-able instructions may comprise instructions adapted to cause a processor to carry out a lookup or search against a table, database, or a similar data structure storing signatures and/or identifiers of a maintenance event, and/or a predictor of a maintenance event. The instructions that cause analysis of the data related to maintenance enable detection and/or prediction of a maintenance event, which in turn enables communicating this maintenance event to a controller in the automated storage and retrieval system, thus enabling further benefits and technical effects due to this communication.

A maintenance event may comprise any event related to maintenance, repairs, inspection, malfunction, or any similar activity and/or related to keeping the automated storage and retrieval system, any device operating in said system, and/or any constituent part of the system operational. For example, the maintenance event may comprise a malfunction event, a preventative maintenance event, a repair event, a degradation event, a fire event, a thermal and/or electric overload event, a part replacement event and/or a battery recharge event.

One of the container handling device or pluggable processing device is configured to transmit an indication of a detected or predicted maintenance event to a controller of the automated storage and retrieval system. The indication may be transmitted via wired communication, wirelessly, optically, or by any other suitable means. The indication may comprise data related to maintenance and/or data obtained by processing the data related to maintenance. For example, the indication may be transmitted using a wireless transmitter configured on a container handling device. In some examples, both the container handling device and pluggable processing device may be configured to transfer the indication. In some examples, the indication may be transferred by multiple means (e.g., both wirelessly and via wired communication), which may improve communication reliability. Transmitting the indication enables preventative and/or restorative maintenance of the container handling device, thus increasing the performance, increasing the reliability, and/or reducing the downtime (e.g., the downtime due to a container handling device malfunction) of the automated storage and retrieval system.

The indication of a detected or predicted maintenance event may comprise data signifying that a particular maintenance event has occurred, data signifying that a particular maintenance event is predicted and/or likely to occur, statistical data (e.g., mean, variance, confidence intervals etc.) associated with a predicted value that relates to a maintenance event, data on basis of which a maintenance event was detected and/or predicted (for example, data gathered from the container handling device before a maintenance event was detected, data gathered from the container handling device analysed when a prediction was made, etc.). The indication may comprise data that may correlate with the detected or predicted maintenance event, data related to subsystems of the container handling device possibly affected by the maintenance event, any other data that directly or indirectly indicates the detected or predicted maintenance event, and/or any other data relevant to the detected or predicted maintenance event. In a particular example, an indication of a detected or predicted maintenance event may comprise the information that a battery in a container handling device failed, voltage and current sensor readings in a given time interval prior to the detected battery failure, and a status report related to a backup battery. Transmitting an indication comprising data that adds additional context related to the predicted and/or detected maintenance event enables more thorough analysis of the maintenance event, better planning and/or enables data-driven control of the automated storage and retrieval system. For example, using the data that adds additional context may enable verifying the predicted and/or detected maintenance event, and/or predicting other maintenance events that correlate with the predicted and/or detected maintenance event communicated in the indication.

The processor may be configured to store an indication of the detected or predicted maintenance event in a location in the one or more memories. The stored indication may be comprised in a data container, a data archive, at least one network datagram adapted for transmission over a particular type of network, or any other appropriate data structure. The location in the one or more memories may comprise a location in virtual memory and/or in physical memory. Storing the indication in the one or more memories increases data redundancy (for example, due to storing the data outside the container handling device) and enables easier access to the indication (for example, due to removing the need to access the internal memory of the container handling device).

The container handling device may access the location via the first and second interfaces. For example, it may access the location in the same way as it would access a pluggable memory device. In a particular example, it may access the location via Direct Memory Access or similar mechanism, via a memory bus, via a message or request sent the pluggable processing device, or via any other mechanism known to a skilled person. Accessing the location via the first and the second interfaces obviates the need for a further communication channel between the container handling device and the pluggable processing device.

The container handling device may determine if an indication is stored in the location. For example, the determining may comprise monitoring (at least a part of) the location for a change, and/or monitoring the location, or a subset of the location, for a particular flag or pattern. In a particular example, the determining may comprise reading the indication from the location. The determining may comprise receiving and/or processing a message and/or a signal signalling that the indication is stored in the location. In a particular example, the determining may comprise handling an interrupt, optionally an interrupt caused by the pluggable processing device.

The container handling device may, in response to determining that the indication is stored in the location, transmit the indication to a controller of the automated storage and retrieval system. The container handling device may add additional data to the indication and/or may process the indication. Transmitting the indication using the container handling device allows the reuse of any transmission devices, circuitry and/or logic configured on the container handling device, which brings all the technical effects and benefits possibly connected to them. For example, the container handling device may be equipped with a more powerful transmitter or a better antenna than the pluggable processing device, which may lead to better signal transmission. In some examples, using the container handling device for transmitting may enable a simpler design of the pluggable processing device (e.g., the pluggable processing device may lack its own transmitter and/or network communication devices and/or communication logic). Moreover, by transmitting the indication to the controller, the automated storage and retrieval system may be controlled to respond to the detected and/or predicted maintenance event indicated by the indication, leading to increased maintainability, reliability and safety of the automated storage and retrieval system.

The pluggable processing device may comprise a transmitter configured to transmit an indication of a detected or predicted maintenance event to a controller of the automated storage and retrieval system. The transmitter may comprise a wireless transmitter. The transmitter may comprise a wired transmitter (e.g., wired Ethernet network device). The transmitter may comprise an antenna and/or a connector for an antenna. The transmitter may comprise a connector for a cable or any other signalling medium. Because the transmitter is configured on the pluggable processing device, the indication may be transmitted even when transmitting using the container handling device is not possible (e.g., due to transmitter malfunction, or lack of suitable hardware), thus increasing the reliability of the system and improving the detection and prediction of maintenance events in an automated storage and retrieval system.

One of the container handling device or pluggable processing device may be configured to transmit the indication to the controller wirelessly. The wireless transmission may occur via any wireless protocol (Wi-Fi, Bluetooth, NFC, AM radio, FM radio, etc.). Wireless transmission simplifies the structure of an automated storage and retrieval system, since no (or less) wires or similar signalling media need to be provided in the automated storage and retrieval system. Furthermore, wireless transmission may be used to triangulate (or otherwise reconstruct and/or estimate on the basis of wireless signal) the last-known position of a failed container handling device in an automated storage and retrieval system.

The first interface may comprise a memory card slot, and the second interface may comprise a mating memory card interface. In a particular example, the first interface may comprise a SD card slot, and the second interface may comprise a mating SD card interface. The memory card slot and the mating memory card interface may be according to any memory card standard (e.g., CompactFlash, MMC, Memory Stick, SD card, etc.). Since memory card interfaces are ubiquitous on existing container handling devices, the use of memory card interfaces simplifies retrofitting the existing container handling devices for use with the pluggable processing device.

In some examples, the first interface may be placed substantially within the inner volume of the container handling device. In a particular example, the first interface may be configured so that the pluggable processing device, when connected to the first interface, does not stick out from the container handling device. By configuring the first interface in this manner, the risk of accidental disconnection of the pluggable processing device (and/or damage to the pluggable processing device) during normal operation of the container handling device is minimised.

The detecting or predicting may comprise using a machine-learning model trained to detect or predict a maintenance event to detect or predict the maintenance event. The machine learning model may be pre-trained on previously gathered and/or simulated data that may be identical to the data related to maintenance. The machine learning algorithm may be adapted for on-line learning using the data related to maintenance. The machine learning algorithm may use any architecture and/or learning process known to a skilled person. The learning process may be supervised (for example, using a data set of previously gathered data related to maintenance annotated with identified maintenance events to train a classifier) and/or unsupervised (for example, using an unannotated data set of previously gathered data related to maintenance to detect data anomalies).

The pluggable processing device may be connected to the container handling device. The pluggable processing device may be disconnected from the container handling device. The connection may be permanent or essentially permanent (for example, the first and the second interface may be glued together). The connecting and/or disconnecting may be done by a human operator, by another device, and/or by the container handling device itself. Connecting the pluggable processing device to the container handling device may enable the pluggable processing device to realise the benefits and/or technical effects that the pluggable processing device is configured to bring when connected to a container handling device.

The connection between the pluggable processing device and the container handling device may be supported by a support mechanism. The support mechanism may comprise a mechanical system (e.g., a locking mechanism), an electromagnetic system (e.g., a connector guided by a magnet), or other suitable system. The connection and disconnection may be done by a human operator, by another device, and/or by the container handling device itself. The support mechanism may increase the stability of the connection and may prevent the pluggable processing device from disconnecting and/or falling away from the container handling device.

### Automated storage and retrieval system

In a second aspect the present disclosure provides an automated storage and retrieval system comprising a container handling device according to the first aspect of this disclosure. The automated storage and retrieval system may be of any type known to a skilled person. In some examples, the automated storage and retrieval system may be adapted (at least in part) for specialised use cases, such as vertical farming and/or storage under controlled environmental conditions. The presence of the container handling device according to the first aspect of the present disclosure enables the system to benefit from the any of the benefits and technical effects described in connection with the first aspect of the present disclosure.

The automated storage and retrieval system comprises a controller configured to receive a transmission from the container handling device, wherein the transmission comprises an indication of a detected or predicted maintenance event. The controller may be distributed across multiple devices. The transmission may be sent by a transmitter configured on the pluggable processing device and/or a transmitter in communication with the container handling device. The controller may be configured for bi-directional communication with the container handling device.

The controller may be configured for wireless communication with the container handling device. The controller may comprise and/or be connectable to one or more antennas and/or a signal amplifier. The controller may be connected to an auxiliary networking device. For example, the controller may be connected via a wired connection (e.g., Ethernet over wire) to the auxiliary networking device and the auxiliary networking device may handle the wireless communication. The controller may be configured for wireless communication using any suitable communication protocol (e.g., Wi-Fi, Bluetooth, NFC, AM radio, FM radio, etc.). Wireless transmission simplifies the structure of an automated storage and retrieval system, since no (or less) wires or similar signalling media need to be provided in the automated storage and retrieval system. Furthermore, wireless transmission may be used to triangulate (or otherwise reconstruct and/or estimate on the basis of wireless signal) the last-known position of a failed container handling device in an automated storage and retrieval system.

The controller may be configured to, in response to receiving an indication of a detected or predicted maintenance event, instruct the container handling device to navigate to a designated area for maintenance. The designated area may comprise any area within the automated storage and retrieval system or an area outside the automated storage and retrieval system. In a particular example, the designated area may be a port of the automated storage and retrieval system. The controller may take over control of the container handling device and instruct the container handling device. The controller may instruct the container handling device autonomously. The controller may instruct the container handling device to take a particular path, for example a path that minimises interference with other parts of the automated storage and retrieval system. The controller may be adapted to accept user input and/or to provide an interface for instruction and/or control of the container handling device. For example, if the container handling device is a vehicle or a robot, the controller may instruct the container handling device to move within or outside the automated storage and retrieval system. For example, if the container handling device is a port, the controller may instruct the container handling device to navigate at least a portion of the container handling device to a position where a human operator may access said portion (e.g., the controller may instruct the port to open and stick out a part of the port outside the inner volume of the automated storage and retrieval system for maintenance).

Instructing the container handling device to navigate to a designated area for maintenance may increase the performance and maintainability of the automated storage and retrieval system by proactively moving the affected container handling device to an area where a technician or a specialised device may attend to the maintenance event. This may also reduce the delay between the moment of detection and/or prediction of the maintenance event and the moment of the required maintenance. The number of occurrences when a human operator needs to enter the automated storage and retrieval system and manually instruct, manipulate, and/or salvage the container handling device may be reduced, thus improving the safety and performance of the automated storage and retrieval system.

The controller may be configured to cause an alert in response to receiving an indication of a detected or predicted maintenance event. The alert may comprise a visual alert, an aural alert, an alert in the form of a message, and/or any other type of alert. The alert may comprise a software alert. The alert may be handled by a different device (e.g., an alarm system). The alert may be communicated outside the automated storage and retrieval system. Causing an alert may make the detected and/or predicted maintenance event more likely to get noticed and, if need be, handled, which may lead to increased safety and reliability of the automated storage and retrieval system.

### Pluggable processing device

In a third aspect the present disclosure provides a pluggable processing device as described in connection with the first aspect of the present disclosure. The pluggable processing device may have any attribute described in connection with the pluggable processing device of the first aspect of the present disclosure. The pluggable processing device may bring and/or enable any of the technical effects and benefits as described in connection with the pluggable processing device elsewhere in the present disclosure.

### Use of the pluggable processing device

In a fourth aspect the present disclosure describes use of the pluggable processing device as described in connection with the first and/or the third aspect of the present disclosure to detect or predict a container handling device maintenance event in an automated storage and retrieval system.

The pluggable processing device may be used by any means and in any way disclosed and/or implied in connection with the any of the first, second and/or third aspects of the present disclosure. Using the pluggable processing device in an automated storage and retrieval system may bring any of the benefits and/or technical effects described in connection with the use of the pluggable processing device elsewhere in the present disclosure.

### Description of examples shown in figures

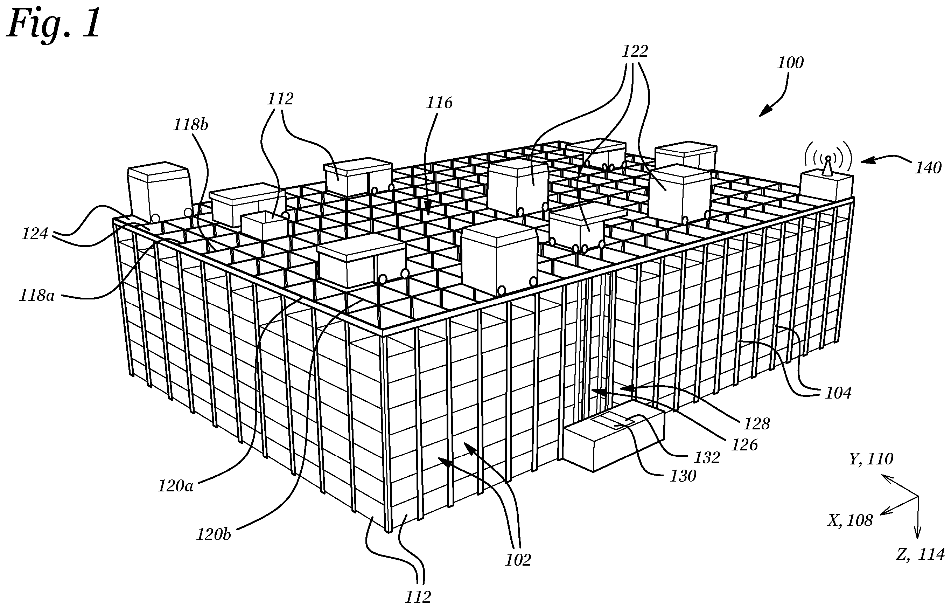

Figs. 1-7 provide illustrative drawings to further aid understanding of the content and context of the present disclosure. Accordingly, the particular examples shown in Figs. 1-7 are not intended to be restrictive

### Automated storage and retrieval system overview

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

A controller 140 receives transmissions from robots 122, ports 130, 132 and other container handling devices equipped with a pluggable processing device as described (not shown). The controller 140 may receive transmission wirelessly and/or may be connected to any other network (e.g., a wired network). In some examples, the controller 140 (or a part of it) may be configured outside the grid 100.

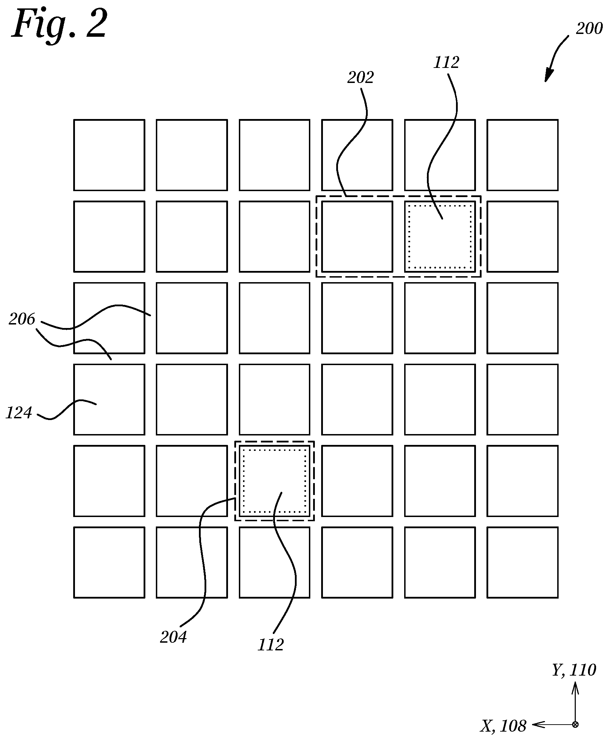

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

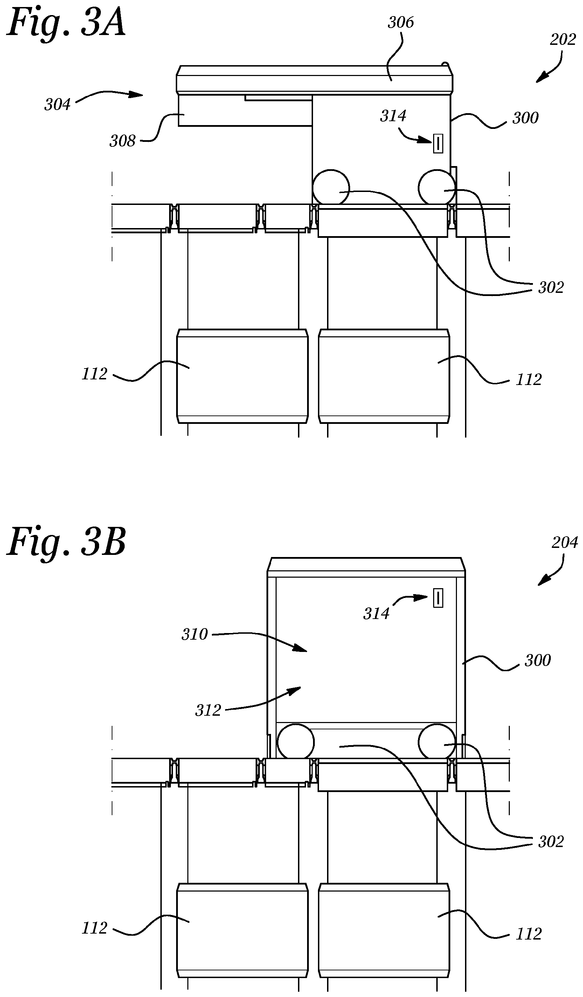

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112. A first interface 314 is accessible on the body 300 of the robot 202.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112. The body 300 of the robot 204 has a first interface 314 configured on its surface.

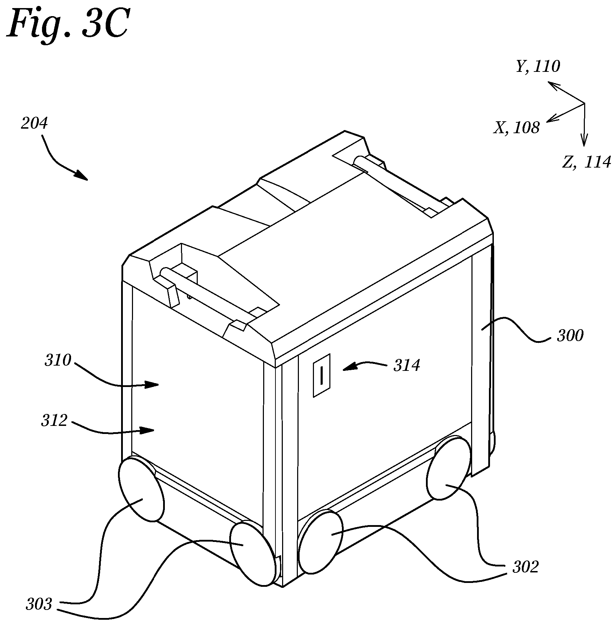

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### On-board computer of a container handling device

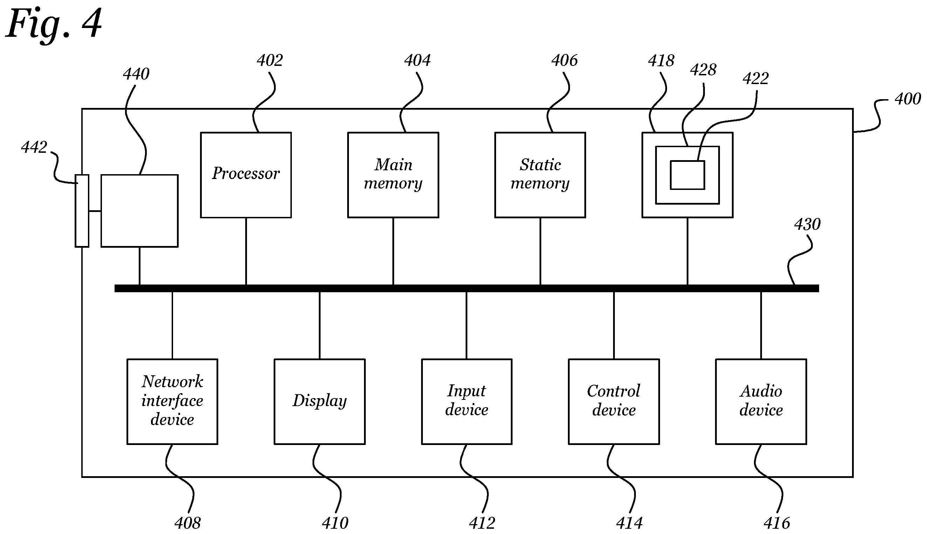

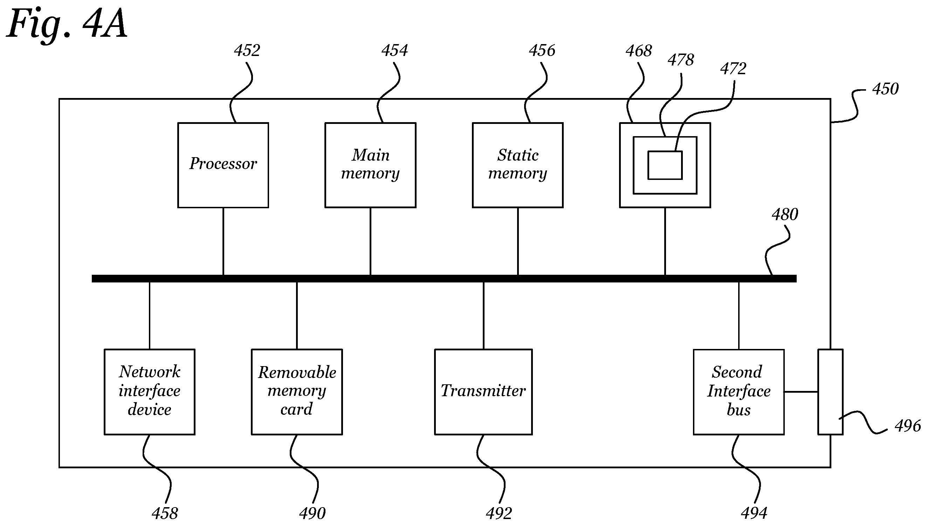

Fig. 4 shows a schematic drawing of various components comprised in an on-board computer 400 of a container handling device. The on-board computer 400 comprises a processor 402 configured to execute machine executable instructions, and a plurality of memories 404, 406, a data storage device 418 comprising one or more machine-readable storage media (or more specifically one or more non-transitory computer-readable storage media) 428 on which is stored one or more sets of instructions 422 embodying any one or more of the methods or functions described herein in connection with the container handling device. The on-board computer further comprises a network interface device 408, a display 410, an input device 412, a control device 414, an audio device 416, and a bus 430. Individual components of the on-board computer 400 are in communication with the bus 430.

Features 400, 402, 404, 406, 408, 410, 412, 414, 416, 418, 428, and 430 may have any attributes and/or variations as described elsewhere in the present disclosure, for example in connection with features 700, 702, 704, 706, 708, 710, 712, 714, 716, 718, 728, and 730, respectively.

The on-board computer 400 comprises an interface bus 440 connected to a first interface 442 and the bus 430. The interface bus 440 may enable communication between the bus 430 and the first interface 442. In some examples, the interface bus 440 is not present and the first interface 442 may connect to the bus 430 or the processor 402.

### Schematic of a pluggable processing device

Fig. 4A shows a schematic drawing of various components comprised in an illustrative embodiment of the pluggable processing device 450. The pluggable processing device 450 comprises a processor 452 configured to execute machine executable instructions, and a plurality of memories 454, 456, a bus 480, and a data storage device 468 comprising one or more machine-readable storage media (or more specifically one or more non-transitory computer-readable storage media) 478 on which is stored one or more sets of instructions 472 embodying any one or more of the methods or functions described herein in connection with the pluggable processing device.

Features 450, 452, 454, 456, 458, 468, 472, 478, 480 may have any attributes and/or variations as described elsewhere in the present disclosure in connection with features 700, 702, 704, 706, 708, 718, 722, 728, and 730, respectively.

The pluggable processing device 450 shown in Fig. 4A comprises an optional removable memory card 490. The removable memory card 490 may be used as the one or more memories comprised in the pluggable processing device. The removable memory card 490 may be connected using an auxiliary interface (not shown) comprised in the pluggable processing device 450. The removable memory card 490 may have an interface not compatible with the first 442 and/or the second interface 496. In some examples, the removable memory card may be connectable to the first 442 and/or second interface 496. In some examples, the pluggable processing device 450 may comprise other types of removable memory devices.

The embodiment illustrated in Fig. 4A features a transmitter 492 comprised in the pluggable processing device 450. The transmitter 492 may be adapted for wireless transmission. The transmitter may comprise or may be connectable to an antenna and/or a signal amplifier. The transmitter 492 may be removable from the pluggable processing device 450 (for example, the transmitter 492 may be connected via a transmitter interface).

The pluggable processing device 450 comprises a second interface 496. The second interface 496 may be connected to a second interface bus 494. The second interface bus is connected to the bus 480. In some examples, the second interface may be connected to the bus 480 and/or to the processor 452.

To give a concrete illustrative example of a possible mode of operation of the pluggable processing device 450, the pluggable processing device 450 may be adapted to analyse statistical properties of sensor data. The pluggable processing device 450 may store sensor data (e.g., motor current or position readings from a sensor provided in a container handling device) in a memory 454, 456, wherein the data is communicated using the first interface 442 and the second interface 496. The processor 452 may execute instructions that implement analysis of the sensor data, for example compute the variance of the data or a subset of the data. The subset may be chosen according to a criterion, for example, the variance may be computed based on sensor data collected in a given time window. If the computed variance exceeds a given threshold, the pluggable processing device may detect and/or predict a maintenance event associated and/or correlated with the computed variance. For example, the sensor data may be an encoder signal of a motor and the variance exceeding a threshold may indicate a malfunction of the encoder. In another example the sensor data may be a current signal indicative of current in the motor and the variance exceeding a threshold may indicate and insulation issue in the motor. In response to said detection and/or prediction, the pluggable processing device 450 may transmit (and/or cause to be transmitted) an indication of the detected and/or predicted maintenance event.

### Pluggable processing device

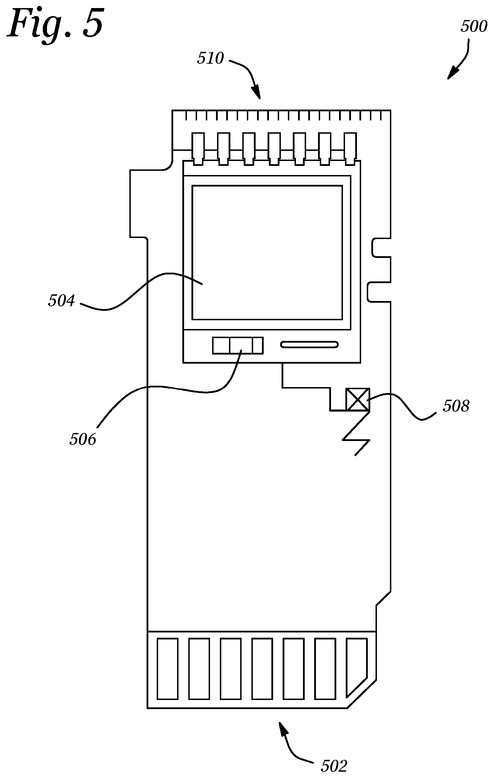

Fig. 5 shows an illustrative embodiment of the pluggable processing device 500 as described in the present disclosure. The pluggable processing device 500 may be similar in form factor to a memory card. The pluggable processing device 500 comprises a second interface 502, in this example in the form of a memory card interface.

The pluggable processing device 500 further comprises a processor 504 in communication with the second interface 502 and a memory 506. The memory 506 is comprised in the one or more memories provided on the pluggable processing device 500. The processor 504 may have any attributes and variations as described elsewhere in this disclosure in connection with feature 702. The memory 506 may have any attributes and variations as described elsewhere in this disclosure in connection with features 704, 706 and/or 718.

The pluggable processing device 500 shown in Fig. 5 further comprises a transmitter 508 connected to an antenna, for example connected to a PCB trace antenna. The transmitter 508 is in communication with the processor 504.

The pluggable processing device 500 may comprise an auxiliary interface 510 for connecting a removable memory card, such as the removable memory card 490. The removable memory card 490 may comprise or be identical to the pluggable memory device described elsewhere in the present disclosure. In a particular example, the pluggable processing device 500 may be configured to sit between the removable memory card 490 and/or the pluggable memory device on one end, and the container handling device on the other end.

### Port

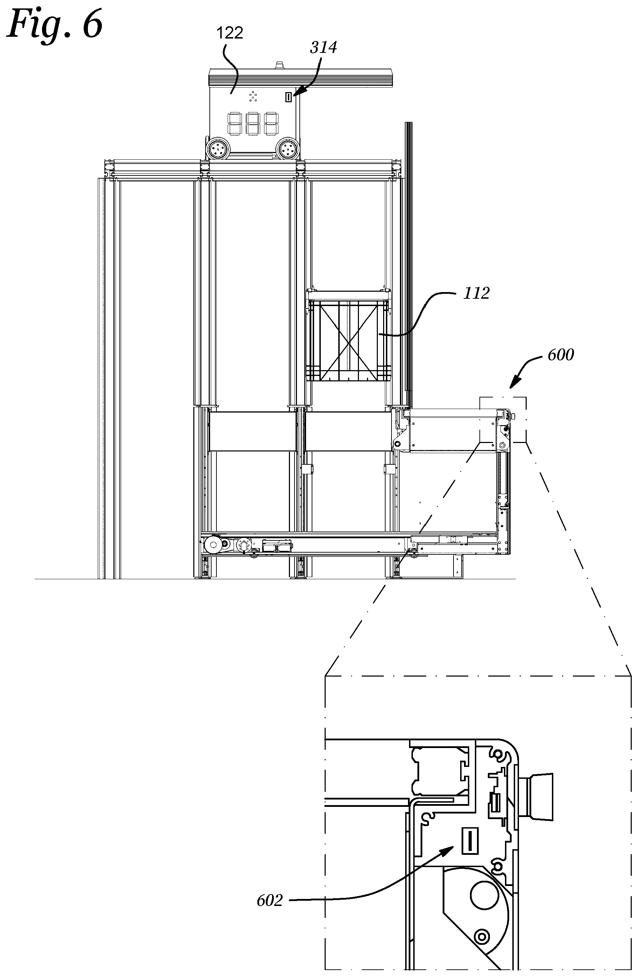

Fig. 6 features an example of a port 600 on a boundary of the grid 100. The port 600 is configured to enable insertion and removal of containers 112 from the automated storage and retrieval system. Fig. 6 captures the operation of lowering the container 112 from the robotic vehicle 122 down to the port 600. Both the robot 122 and the port 600 comprise an instance of the first interface 314, 602. The first interfaces 314, 602 configured on various container handling devices within a single automated storage and retrieval system may vary, in which case the second interfaces will vary as well. For example, while a first interface of the first kind within an automated storage and retrieval system may comprise an SD card slot, a first interface of the second kind within the same automated storage and retrieval system may comprise a USB slot.

### Control and monitoring system

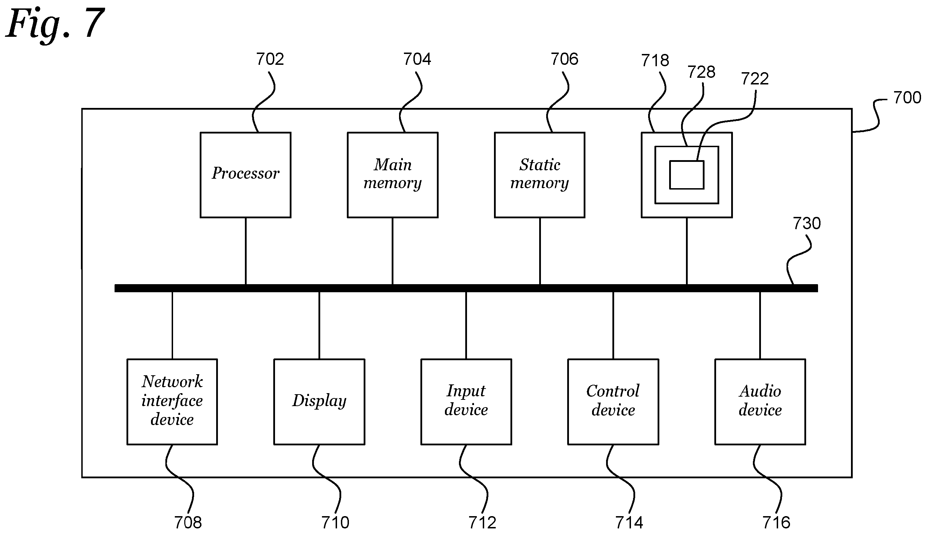

Control and monitoring of the automated storage and retrieval system, including monitoring and storing bin position and controlling bin delivery, retrieval and transport and robot routing and collision avoidance, is performed by a control system shown in Fig. 7 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein. In a particular example, the control system shown in Fig. 7 may act as the controller 140 described, for example, in connection with Fig. 1, and the first and the second aspect of the present disclosure.

With reference to Fig. 7, a processing system 700 suitable for carrying out the methods described herein will now be described. Fig. 7 shows a block diagram of one implementation of a processing system 700 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 700 includes a processor 702, a main memory 704 (e.g., read-only memory (ROM), flash memory, dynamic random-access memory (DRAM) such as synchronous DRAM (SDRAM) or Rambus DRAM (RDRAM), etc.), a static memory 706 (e.g., flash memory, static random-access memory (SRAM), etc.), and a secondary memory (e.g., a data storage device 718), which communicate with each other via a bus 730.

Processor 702 represents one or more general-purpose processors such as a microprocessor, central processing unit, or the like. More particularly, the processor 702 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 702 may also be one or more special-purpose processors such as an application specific integrated circuit (ASIC), a field programmable gate array (FPGA), a digital signal processor (DSP), network processor, or the like. Processor 702 is configured to execute the processing logic (instructions 722) for performing the operations and steps described herein.

The processing system 700 may further include a network interface device 708. The network interface device 708 may be adapted for wireless communication.

It will be apparent that some features of the processing system 700 shown in Fig. 7 may be absent. For example, the processing system 700 may have no need for display device 710 (or any associated adapters). This may be the case, for example, for particular server-side computer apparatuses which are used only for their processing capabilities and do not need to display information to users. Similarly, user input device 712 may not be required. In its simplest form, processing system 700 comprises processor 702 and main memory 704.

The data storage device 718 may include one or more machine-readable storage media (or more specifically one or more non-transitory computer-readable storage media) 728 on which is stored one or more sets of instructions 722 embodying any one or more of the methods or functions described herein. The instructions 722 may also reside, completely or at least partially, within the main memory 704 and/or within the processor 702 during execution thereof by the processing system 700, the main memory 704 and the processor 702 also constituting computer-readable storage media 728.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 702 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 700 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 700, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

A pluggable processing device 500, for example as described above, may be connected to a container handling device, such as a port 130, 132, 600 or a robot 122, using a first interface 314, 602 configured on the container handling device. The pluggable processing device 500 comprises a second interface 502 and the container handling device and the pluggable processing device 500 may be connected via the first interface 314, 602 and the second interface 502. The container handling device may send data to the pluggable processing device 500 via the first 314, 602 and second 502 interfaces, which the processor 504 may analyse to detect or predict a maintenance event. One of the container handling device or the pluggable processing device may transmit an indication of the detected and/or predicted maintenance event to a controller 140, 700.

The controller 140 may, in response to the received indication of the maintenance event, instruct the container handling device to move to a designated location, cause an alarm, and/or further process the data comprised in the received indication and/or data received along with the indication. In some examples, the controller 140 may communicate with the container handling devices in the system and inform and/or instruct them based on the received indication and/or other relevant data.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

It is to be understood that the location in the one or more memories of the pluggable processing device need not correspond to a contiguous chunk of memory, and that the location need not correspond to a single addressable unit of memory. In a particular example, the location may comprise multiple sublocations and memory pointers among them. Furthermore, it is to be understood that a skilled person would readily understand that the location as described herein can be obviously adapted to other memory models and/or addressing schemes.

Any standardised physical connectors, communication protocols, and/or any other standardised technical teaching should be understood to comprise the maximal breath of variants that can be subsumed under the label used herein. For example, the term "Wi-Fi" or its variants should be understood to comprise any protocol in the IEEE 802.11 family of protocols. Similarly, the phrase "USB interface" should be understood to comprise Type-A, Type-B, Type-C connectors in standard, mini, and micro form factors, according to any revision of the USB standard, and any other connector listed in any USB standard. The terms "SD card slot", "SD card interface" and similar should be understood to comprise at least the interfaces on SD cards in the standard (e.g., SDSC, SDHC, SDXC, SDIO, SDUC memory cards), mini (e.g., miniSD, miniSDHC, miniSDIO memory cards), and micro (e.g., microSD, microSDHC, microSDXC, microSDUC) form factors. Interfaces including the additional pins for UHS-II, UHS-III, or SD Express cards, or any later version of these memory cards, or any memory card interface described in any of the relevant standards published by the SD Association should be also included.

## Claims

1. A container handling device for handling storage containers in an automated storage and retrieval system with a pluggable processing device, wherein the container handling device comprises a first interface for connecting to a pluggable memory device and is configured to store data related to maintenance of the container handling device on a pluggable memory device via the first interface and wherein the pluggable processing device comprises:
a second interface connectable to the first interface;
one or more processors; and
one or more memories storing machine-executable instructions configured to cause the one or more processors to: access data related to maintenance of the container handling device stored on the pluggable processing device via the first interface and the second interface; analyse the data related to maintenance of the container handling device to detect or predict a maintenance event; and
wherein one of the container handling device or pluggable processing device is configured to transmit an indication of a detected or predicted maintenance event to a controller of the automated storage and retrieval system.

2. The container handling device according to claim 1, wherein the container handling device is a robotic vehicle for transporting storage containers or a port for accepting storage containers from a robotic vehicle.

3. The container handling device according to any preceding claim, wherein the processor is configured to store an indication of the detected or predicted maintenance event in a location in the one or more memories and the container handling device is configured to access the location via the first and second interfaces, determine if an indication is stored in the location and, in response to determining that the indication is stored in the location, transmit the indication to a controller of the automated storage and retrieval system.

4. The container handling device according to any preceding claim, wherein the pluggable processing device comprises a transmitter configured to transmit an indication of a detected or predicted maintenance event to a controller of the automated storage and retrieval system.

5. The container handling device according to any preceding claim, wherein the one of the container handling device or pluggable processing device is configured to transmit the indication to the controller wirelessly.

6. The container handling device according to any preceding claim, wherein the first interface is a memory card slot, optionally a SD card slot, and the second interface comprises a mating memory card interface, optionally a mating SD card interface.

7. The container handling device according to any preceding claim, wherein the detecting or predicting comprises using a machine-learning model trained to detect or predict a maintenance event to detect or predict the maintenance event.

8. The container handling device according to any preceding claim, wherein data related to maintenance comprises at least one of:
a sensor measurement; optionally a temperature, voltage, or current sensor measurement;
an identifier of a software exception or malfunction; or
an identifier of a hardware malfunction.

9. The container handling device according to any preceding claim, wherein the pluggable processing device is connected to the container handling device.

10. An automated storage and retrieval system comprising:
a container handling device according to any of claims 1-9; and
a controller configured to receive a transmission from the container handling device, wherein the transmission comprises an indication of a detected or predicted maintenance event.

11. The system according to claim 10, wherein the controller is configured for wireless communication with the container handling device.

12. The system according to any of claims 10-11, wherein the controller is configured to, in response to receiving an indication of a detected or predicted maintenance event, instruct the container handling device to navigate to a designated area for maintenance, optionally wherein the designated area is a port of the system.

13. The system according to any of claims 10-12, wherein the controller is configured to cause an alert in response to receiving an indication of a detected or predicted maintenance event.

14. The pluggable processing device as recited in any of claims 1-9.

15. Use of the pluggable processing device as described in any of claims 1-9 to detect or predict a container handling device maintenance event in an automated storage and retrieval system.
